# EUROPÄISCHE PATENTSCHRIFT

(11) **EP 1 599 516 B1**
(45) Veröffentlichungstag und Bekanntmachung des Hinweises auf die Patenterteilung: **02.08.2006**
(21) Anmeldenummer: 04717093.1
(22) Anmeldetag: 04.03.2004
(51) Int. Cl.: C08F 214/06

(54) **EPOXY-MODIFIZIERTE VINYLCHLORID-VINYLESTER-COPOLYMER-FESTHARZE**
EPOXY-MODIFIED VINYL CHLORIDE-VINYL ESTER COPOLYMER SOLID RESIN
RESINE SOLIDE DE COPOLYMERES D'ESTER DE VINYLE-CHLORURE DE VINYLE EPOXIDES

(30) Priorität: 06.03.2003 DE 10309857
(43) Veröffentlichungstag der Anmeldung: 30.11.2005
(73) Patentinhaber: Wacker Polymer Systems GmbH & Co. KG, 84489 Burghausen (DE); Vinnolit GmbH & Co. KG, 85737 Ismaning (DE)
(72) Erfinder: KAISER, Stephan, 84503 Altötting (DE); WEBER, Karl, 84579 Unterneukirchen (DE)
(74) Vertreter: Schuderer, Michael
(86) Internationale Anmeldenummer: PCT/EP2004/002213
(87) Internationale Veröffentlichungsnummer: WO 2004/078806

(56) Entgegenhaltungen:
- EP-A- 0 264 916
- EP-A- 0 989 162
- GB-A- 1 596 689
- US-A- 4 707 411
- US-A- 4 900 777

## Beschreibung

Die Erfindung betrifft ein Verfahren zur Herstellung von Epoxy-modifizierten Vinylchlorid-Vinylester-Copolymer-Festharzen.

Epoxygruppen enthaltende Vinylchlorid-Mischpolymerisate werden als Bindemittel in Lacken eingesetzt. Hervorzuheben ist die Verwendung in Heißsiegellacken, beispielsweise zur Aluminiumbeschichtung. Etabliert sind epoxyhaltige Vinylchlorid-Vinylacetat-Copolymerisate, welche allerdings nur als Lösungen, beispielsweise in Toluol und/oder Methylethylketon, erhältlich sind. Dies hat für den Anwender den Nachteil, dass er bezüglich der Auswahl des Lösungsmittels, welches er zur Applikation des Lackharzes einsetzen kann, stark eingeschränkt wird, nämlich auf das Lösungsmittel in dem das Lackharz angeboten wird, oder damit verträgliche Lösungsmittel.

Vor diesem Hintergrund lag der Erfindung die Aufgabe zugrunde, Epoxy-modifizierte Vinylchlorid-Vinylester-Copolymere in Form deren Festharze zur Verfügung zu stellen.

Gegenstand der Erfindung ist ein Verfahren zur Herstellung von Epoxy-modifizierten Vinylchlorid-Vinylester-Copolymeren in Form deren Festharze erhältlich mittels wässriger, radikalisch initiierter Polymerisation eines Gemisches enthaltend
a) 50 bis 90 Gew.-% Vinylchlorid,
b) 5 bis 25 Gew.-% Epoxid-haltige Vinylmonomere, und
c) 5 bis 25 Gew.-% eines oder mehrerer Vinylester von unverzweigten oder verzweigten Alkylcarbonsäuren mit 1 bis 18 C-Atomen,
d) 0 bis 40 Gew.-% weitere mit a), b) und c) copolymerisierbare Comonomere, wobei sich die Angaben in Gew.-% auf 100 Gew. -% aufaddieren,
und anschließender Trocknung der dabei erhaltenen wässrigen Dispersionen, dadurch gekennzeichnet, dass mittels Suspensionspolymerisation in Gegenwart von Reglern aus der Gruppe der Aldehyde polymerisiert wird.

Vorzugsweise werden 70 bis 90 Gew.-%, besonders bevorzugt 75 bis 85 Gew.-% Vinylchlorid copolymerisiert.

Geeignete Epoxid-haltige Vinylmonomere b) sind beispielsweise Methylglycidylmethacrylat, Methylglycidylacrylat, Allylglycidylether, Allylphenolglycidylether, Glycidylmethacrylat. Bevorzugt wird Glycidylmethacrylat (GMA). Vorzugsweise werden 5 bis 15 Gew.-%, besonders bevorzugt 8 bis 15 Gew.-% Epoxidhaltige Vinylmonomere b), insbesondere Glycidylmethacrylat, copolymerisiert.

Bevorzugte Vinylester-Monomere c) sind solche von Carbonsäuren mit 1 bis 12 C-Atomen. Besonders bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Am meisten bevorzugt ist Vinylacetat. Vorzugsweise werden 5 bis 15 Gew.-% der Vinylester-Monomere c), insbesondere Vinylacetat, copolymerisiert.

Geeignete weitere, copolymerisierbare Comonomere d) sind ein oder mehrere ethylenisch ungesättigte Monomere aus der Gruppe umfassend Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Anhydride.

Bevorzugte Monomere aus der Gruppe Acrylsäureester oder Methacrylsäureester sind Ester von unverzweigten oder verzweigten Alkoholen mit 1 bis 15 C-Atomen. Besonders bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Am meisten bevorzugt sind Methylacrylat, Methylmethacrylat, n-Butylacrylat, t-Butylacrylat und 2-Ethylhexylacrylat.

Beispiele für geeignete ethylenisch ungesättigte Mono- und Di-Carbonsäuren sowie deren Anhydride sind Acrylsäure, Methacrylsäure, Fumarsäure, Itaconsäure, Crotonsäure, Maleinsäure, Maleinsäureanhydrid.

Die radikalisch initiierte Polymerisation erfolgt mittels Suspensionspolymerisation. Die Polymerisationstemperatur beträgt im allgemeinen 20°C bis 80°C. Die Initiierung der Polymerisation kann mit den gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure. Beispiele für monomerlösliche Initiatoren sind Dicetylperoxydicarbonat, Dicyclohexylperoxydicarbonat, Dibenzoylperoxid und tert.-Butylperoxypivalat. Die genannten Initiatoren werden im allgemeinen in einer Menge von 0.01 bis 1.0 Gew.-%, bevorzugt 0.1 bis 0.5 Gew.-%, jeweils bezogen auf das Gesamtgewicht der Monomere, eingesetzt.

Bei der Suspensions polymerisation wird in Wasser in Gegenwart von oberflächenaktiven Substanzen wie Schutzkolloiden und/oder Emulgatoren polymerisiert. Geeignete Schutzkolloide sind beispielsweise teilverseifte Polyvinylalkohole und Celluloseether. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Zur Verbesserung der Thermostabilität der Festharze kann gegebenenfalls während oder nach der Polymerisation 0.001 bis 0.1 Gew.-%, vorzugsweise 0.005 bis 0.05 Gew.-% Ascorbinsäure und/oder Iso-Ascorbinsäure, jeweils bezogen auf das Gesamtgewicht der Comonomere, zugegeben. Bevorzugt wird Ascorbinsäure eingesetzt. Die Zugabe erfolgt vorzugsweise nach Abschluß der Monomerdosierung sowie vor, während oder nach der Restmonomerentfernung. Am meisten bevorzugt ist die Ausführungsform bei der zusätzlich zur Ascorbinsäure und/oder Iso-Ascorbinsäure noch Zitronensäure zugegeben wird. Die Menge an Zitronensäure beträgt 0.001 bis 0.1 Gew.-%, vorzugsweise 0.005 bis 0.05 Gew.-%, jeweils bezogen auf das Gesamtgewicht der Comonomere.

Zur Steuerung des Molekulargewichts werden während der Polymerisation regelnde Substanzen eingesetzt. Die Regler werden in Mengen zwischen 0.02 bis 10.0 Gew.-%, bezogen auf die zu polymerisierenden Monomeren, eingesetzt und separat oder auch vorgemischt mit Reaktionskomponenten dosiert. Geeignete Regler sind Aldehyde wie Acetaldehyd, Propionaldehyd, Butyraldehyd und Isobutyraldehyd.

Vorzugsweise wird in Gegenwart von Propionaldehyd polymerisiert. Propionaldehyd hat gegenüber anderen Reglern wie etwa Trichlorethylen den Vorteil, dass mit geringeren Mengen bereits eine regelnde Wirkung erzielt wird. Bevorzugt wird es daher, je nach erwünschtem Molekulargewicht, in einer Menge von 0.02 bis 5 Gew.-%, bezogen auf Monomer, zugegeben.

Die Monomere können insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden. Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Das Epoxy-modifizierte Vinylchlorid-Vinylester-Copolymere kann aus der wässrigen Dispersion mittels üblicher Verfahren durch Ausfällen, Filtrieren und anschließender Trocknung, oder mittels Dekantieren und anschließender Trocknung, in Form des Festharzes isoliert werden. Die Trocknung kann in dem Fachmann bekannter Weise beispielsweise in einem Trommeltrockner, in einem Strömungsrohr, im Fließbett, oder in einem Zyklontrockner erfolgen.

Die Epoxy-modifizierten Vinylchlorid-Vinylester-Copolymere zeichnen sich durch hohe Blockbeständigkeit bis 180°C aus, und durch hohe chemische Beständigkeit gegenüber Lösungsmitteln, Säuren und Basen.

Die nachfolgenden Beispiele dienen der weiteren Erläuterung der Erfindung:

### Beispiel 1:

Nach dem Verfahren der Suspensionspolymerisation wurde ein Copolymer mit 82 Gew.-% Vinylchlorid, 9 Gew.-% Vinylacetat, und 9 Gew.-% Glycidylmethacrylat hergestellt, wobei die Comonomeren vor der Initiierung der Polymerisation korriplett vorgelegt worden sind. Nach Abschluß der Polymerisation wurde der Ansatz auf Atmosphärendruck entspannt, und es wurden 0.05 Gew.-% Ascorbinsäure zugegeben. Anschließend wurde entmonomerisiert, das Copolymer filtriert, gewaschen und getrocknet.
Es wurde ein weisses, rieselfähiges Pulver erhalten.

### Beispiel 2:

Nach dem Verfahren der Emulsionspolymerisation wurde ein Copolymer aus 82 Gew.-% Vinylchlorid, 9 Gew.-% Vinylacetat und 9 Gew.-% Glycidylmethacrylat hergestellt. Zum Reaktionsende wurde auf Atmosphärendruck entspannt, und dem Ansatz 0.02 Gew.-% Ascorbinsäure und 0.0025 Gew.-% Zitronensäure zugegeben, jeweils bezogen auf das Gesamtgewicht der Comonomere und jeweils als 10 %-ige wässrige Lösung. Anschließend wurde entmonomerisiert, und das Copolymerisat gefällt, filtriert, gewaschen und getrocknet.
Es wurde ein weisses, rieselfähiges Pulver erhalten.

### Beispiel 3:

Es wurde analog Beispiel 2 vorgegangen, mit dem Unterschied, dass in Gegenwart von 2 Gew.-% Propionaldehyd, bezogen auf Gesamtmonomer, polymerisiert wurde.
Eine 20 Gew.-%-ige Lösung des Copolymers in Methylethylketon zeigte eine geringere Lösungsviskosität als das Produkt aus Beispiel 3, und blieb auch nach einer Lagerzeit von einer Woche bei 60°C vollkommen farblos.

## Patentansprüche

1. Verfahren zur Herstellung von Epoxy-modifizierten Vinylchlorid-Vinylester-Copolymeren in Form deren Festharze erhältlich mittels wässriger, radikalisch initiierter Polymerisation eines Gemisches enthaltend
a) 50 bis 90 Gew.-% Vinylchlorid,
b) 5 bis 25 Gew.-% Epoxid-haltige Vinylmonomere, und
c) 5 bis 25 Gew.-% eines oder mehrerer Vinylester von unverzweigten oder verzweigten Alkylcarbonsäuren mit 1 bis 18 C-Atomen,
d) 0 bis 40 Gew.-% weitere mit a), b) und c) copolymerisierbare Comonomere, wobei sich die Angaben in Gew.-% auf 100 Gew.-% aufaddieren,
und anschließender Trocknung der dabei erhaltenen wässrigen Dispersionen, **dadurch gekennzeichnet, dass** mittels Suspensionspolymerisation in Gegenwart von Reglern aus der Gruppe der Aldehyde polymerisiert wird.

2. Verfahren gemäß Anspruch 1, **dadurch gekennzeichnet, dass** 5 bis 15 Gew.-% Epoxid-haltige Vinylmonomere enthalten sind.

3. Verfahren gemäß Anspruch 1 oder 2, **dadurch gekennzeichnet, dass** als Comonomere b) ein oder mehrere Epoxid-haltige Vinylmonomere aus der Gruppe umfassend Methylglycidylmethacrylat, Methylglycidylacrylat, Allylglycidylether, Allylphenolglycidylether, Glycidylmethacrylat copolymerisiert werden.

4. Verfahren gemäß Anspruch 1 bis 3, **dadurch gekennzeichnet, dass** als Comonomere c) ein oder mehrere Vinylester aus der Gruppe umfassend Vinylacetat, Vinylpropionat, Vinylbutyrat, Vinyl-2-ethylhexanoat, Vinyllaurat, 1-Methylvinylacetat, Vinylpivalat und Vinylester von α-verzweigtenMonocarbonsäuren mit 9 bis 13 C-Atomen, gegebenenfalls in Kombination mit einem oder mehreren Comonomeren aus der Gruppe umfassend Acrylsäure, Methacrylsäure, Fumarsäure, Itaconsäure, Crotonsäure, Maleinsäure, Maleinsäureanhydrid, copolymerisiert werden.

5. Verfahren nach Anspruch 1 bis 4, **dadurch gekennzeichnet, dass** während oder nach der Polymerisation 0.001 bis 0.1 Gew.-% Ascorbinsäure und/oder Iso-Ascorbinsäure, bezogen auf das Gesamtgewicht der Comonomere, zugegeben werden, und gegebenenfalls zusätzlich zur Ascorbinsäure und/oder Iso-Ascorbinsäure noch Zitronensäure in einer Menge von 0.001 bis 0.1 Gew.-%, bezogen auf das Gesamtgewicht der Comonomere, zugegeben wird.

6. Verfahren nach Anspruch 1 bis 5, **dadurch gekennzeichnet, dass** in Gegenwart von 0.02 bis 10 Gew.-%, bezogen auf die zu polymerisierenden Monomere, an regelnden Substanzen polymerisiert wird.

7. Verfahren nach Anspruch 1 bis 6, **dadurch gekennzeichnet, dass** in Gegenwart von Propionaldehyd polymerisiert wird.

## Claims

1. Process for the preparation of epoxy-modified vinyl chloride-vinyl ester copolymers in the form of the solid resins thereof obtainable by means of aqueous, free radical polymerization of a mixture comprising
a) from 50 to 90% by weight of vinyl chloride,
b) from 5 to 25% by weight of epoxide-containing vinyl monomers and
c) from 5 to 25% by weight of one or more vinyl esters of straight-chain or branched alkylcarboxylic acids having from 1 to 18 carbon atoms,
d) from 0 to 40% by weight of further comonomers copolymerizable with a), b) and c), the data in % by weight summing to 100% by weight,
and subsequent drying of the aqueous dispersions obtained thereby, **characterized in that** polymerization is effected by means of suspension polymerization in the presence of regulators from the group consisting of the aldehydes.

2. Process according to Claim 1, **characterized in that** from 5 to 15% by weight of epoxide-containing vinyl monomers are present.

3. Process according to Claim 1 or 2, **characterized in that** one or more epoxide-containing vinyl monomers from the group consisting of methyl glycidyl methacrylate, methyl glycidyl acrylate, allyl glycidyl ether, allylphenol glycidyl ether and glycidyl methacrylate are copolymerized as comonomers b).

4. Process according to any of Claims 1 to 3, **characterized in that** one or more vinyl esters from the group consisting of vinyl acetate, vinyl propionate, vinyl butyrate, vinyl 2-ethylhexanoate, vinyl laurate, 1-methyl vinyl acetate, vinyl pivalate and vinyl esters of α-branched monocarboxylic acids having 9 to 13 carbon atoms, optionally in combination with one or more comonomers from the group consisting of acrylic acid, methacrylic acid, fumaric acid, itaconic acid, crotonic acid, maleic acid and maleic anhydride are copolymerized as comonomers c).

5. Process according to any of Claims 1 to 4, **characterized in that** from 0.001 to 0.1% by weight of ascorbic acid and/or isoascorbic acid, based on the total weight of the comonomers, are added during or after the polymerization, and optionally citric acid in an amount of from 0.001 to 0.1% by weight, based on the total weight of the comonomers, is also added in addition to the ascorbic acid and/or isoascorbic acid.

6. Process according to any of Claims 1 to 5, **characterized in that** polymerization is effected in the presence of from 0.02 to 10% by weight, based on the monomers to be polymerized, of regulating substances.

7. Process according to any of Claims 1 to 6, **characterized in that** polymerization is effected in the presence of propionaldehyde.

## Revendications

1. Procédé de préparation de copolymères de chlorure de vinyle - ester vinylique époxydés sous forme de leurs résines solides que l'on peut obtenir par polymérisation à initiation radicalaire en milieu aqueux d'un mélange contenant
a) de 50 à 90% en poids de chlorure de vinyle,
b) de 5 à 25% en poids de monomères vinyliques contenant un époxyde, et
c) de 5 à 25% en poids d'un ou plusieurs esters vinyliques d'acides alkylcarboxyliques non ramifiés ou ramifiés comportant de 1 à 18 atomes de C,
d) de 0 à 40% en poids d'autres comonomères copolymérisables avec a), b) et c), les indications de pourcentages en poids totalisant 100% en poids,
et séchage subséquent des dispersions aqueuses ainsi obtenues, **caractérisé en ce que** l'on polymérise par polymérisation en suspension en présence de régulateurs du groupe des aldéhydes.

2. Procédé suivant la revendication 1, **caractérisé par** la présence de 5 à 15% en poids de monomères vinyliques contenant un époxyde.

3. Procédé suivant la revendication 1 ou 2, **caractérisé en ce que** l'on copolymérise en tant que comonomères b) un ou plusieurs monomères vinyliques contenant un époxyde du groupe comprenant du méthacrylate de méthylglycidyle, de l'acrylate de méthylglycidyle, de l'éther allylglycidylique, de l'éther allylphénolglycidylique, du méthacrylate de glycidyle.

4. Procédé suivant les revendications 1 à 3, **caractérisé en ce que** l'on polymérise, en tant que comonomères c), un ou plusieurs esters vinyliques du groupe comprenant l'acétate de vinyle, le propionate de vinyle, le butyrate de vinyle, l'hexanoate de vinyl-2-éthyle, le laurate de vinyle, l'acétate de 1-méthylvinyle, le pivalate de vinyle et des esters vinyliques d'acides monocarboxyliques ramifiés en position α et comportant de 9 à 13 atomes de C, le cas échéant en combinaison avec un ou plusieurs comonomères du groupe comprenant l'acide acrylique, l'acide méthacrylique, l'acide fumarique, l'acide itaconique, l'acide crotonique, l'acide maléique, l'anhydride maléique.

5. Procédé selon les revendications 1 à 4, **caractérisé en ce que**, pendant ou après la polymérisation, on ajoute de 0,001 à 0,1% en poids d'acide ascorbique et/ou d'acide isoascorbique, par rapport au poids total des comonomères, et le cas échéant, outre de l'acide ascorbique et/ou de l'acide isoascorbique, de l'acide citrique en une quantité de 0,001 à 0,1% en poids, par rapport au poids total des comonomères.

6. Procédé suivant les revendications 1 à 5, **caractérisé en ce que** l'on entreprend la polymérisation en présence de 0,02 à 10% en poids, par rapport aux monomères à polymériser, de substances régulatrices.

7. Procédé suivant les revendications 1 à 6, **caractérisé en ce que** l'on entreprend la polymérisation en présence d'aldéhyde propionique.
